# EUROPEAN PATENT SPECIFICATION

(11) **EP 4 367 771 B1**
(45) Date of publication and mention of the grant of the patent: **03.06.2026**
(21) Application number: 22838502.7
(22) Date of filing: 08.07.2022
(51) Int. Cl.: H02J 3/38, H02J 7/34, H02J 3/40, H02J 3/00, H02J 1/10, H02J 3/32

(54) **COMMON DC BUS AND COMMON AC BUS POWER ELECTRONICS SYSTEMS AND METHODS**
GEMEINSAME GLEICHSTROMBUS- UND GEMEINSAME WECHSELSTROMBUS-LEISTUNGSELEKTRONIKSYSTEME UND VERFAHREN
SYSTÈMES ET PROCÉDÉS ÉLECTRONIQUES DE PUISSANCE DE BUS CC COMMUN ET DE BUS CA COMMUN

(30) Priority: 08.07.2021 US 202163219732 P
(43) Date of publication of application: 15.05.2024
(73) Proprietor: Nextpower LLC, Fremont, CA 94555 (US)
(72) Inventor: BORRELLI, Francesco, Kensington, California 94707 (US); LI, Chen, Fremont, California 94538 (US); LIU, Yang, Mountain View, California 94043 (US); AU, Alexander, Oakland, California 94605 (US)
(74) Representative: v. Bezold & Partner Patentanwälte - PartG mbB
(86) International application number: PCT/US2022/036593
(87) International publication number: WO 2023/283470

(56) References cited:
- CN-B- 108 539 797
- CN-B- 110 350 792
- US-A1- 2009 160 259
- US-A1- 2010 253 151
- US-A1- 2011 232 714
- US-A1- 2013 106 196
- US-A1- 2018 090 936
- US-A1- 2019 334 349
- US-B2- 9 887 545

## Description

### FIELD

The technology of the disclosure is generally related to power electronic systems and methods for operating local controllers of inverters by decentralized controllers and maintaining a constant DC voltage at the input to the inverters based on a DC load predicted by a centralized controller.

### BACKGROUND

In power systems for some solar applications, multiple parallel bidirectional inverters are coupled to multiple arrays of photovoltaic devices and the bidirectional inverters are coupled to a DC bus. However, the power system may not function properly when large numbers of bidirectional inverters (e.g., greater than 40 bidirectional inverters) are coupled together in this configuration. Also, the power system may not function properly when the common DC load alternates between positive and negative potentials.

The document CN 110 350 792 discloses a system according to the preamble of claim 1.

### SUMMARY

The techniques of this disclosure generally relate to power electronic systems and methods for operating local controllers of inverters by decentralized controllers and maintaining a constant DC voltage at the input to the inverters based on a DC load predicted by a centralized controller.

In one aspect, the disclosure provides a system including inverters, a common DC bus, a common AC bus, local controllers, decentralized controllers, and a centralized controller. The inverters are coupled together in parallel. The common DC bus is coupled to inputs of the inverters. The common AC bus is coupled between outputs of the inverters and an electrical power grid. The local controllers are coupled to the inverters, respectively. The decentralized controllers are coupled to the local controllers, respectively. The decentralized controllers measure voltages and currents of the electrical power grid and the inverters, and generate decentralized control signals for the local controllers based on the measured voltages and currents of the electrical power grid and the inverters. The centralized controller is in communication with the local controllers. The centralized controller predicts a DC load and transmits centralized control signals to the local controllers to maintain a constant voltage on the common DC bus based on the predicted DC load.

Implementations of this aspect may include one or more of the following features. The inverters may be three-phase inverters. The DC load may include a photovoltaic (PV) device, an energy storage device, or the PV device and the energy storage device. The centralized controller may operate at a slower speed than the decentralized controllers. The number of inverters may be greater than 20 or may be greater than 40.

The centralized control signals may be voltage control signals that cause an even distribution of current at outputs of the inverters. The centralized control signals may be voltage control signals that cause the currents at outputs of the inverters to track reference currents.

The centralized controller may execute a polynomial droop control algorithm. Each decentralized controller may execute a droop control algorithm, such as a polynomial droop control algorithm.

The centralized controller may be incorporated into one local controller of the local controllers and may function as a master controller, and the remaining local controllers of the local controllers may function as slave controllers. The local controllers operating as a master controller and slave controllers may communicate with each other via the EtherCAT protocol.

In another aspect, the disclosure provides a control method. The control method includes locally controlling, by local controllers, inverters coupled together in parallel between a common DC bus and a common AC bus. The control method also includes measuring, by decentralized controllers coupled to the local controllers, respectively, voltages and currents of an electrical power grid coupled to the common AC bus and of the inverters; and generating, by the decentralized controllers, decentralized control signals for the local controllers based on the measured voltages and currents of the electrical power grid and of the inverters. The control method also includes predicting, by a centralized controller in communication with the local controllers, a DC load; and transmitting, by the centralized controller, centralized control signals to the local controllers to maintain a constant voltage on the common DC bus based on the predicted DC load.

Implementations of this aspect may include one or more of the following features. The inverters may be three-phase inverters. The DC load may include a photovoltaic (PV) device, an energy storage device, or the PV device and the energy storage device. The centralized controller may be operated at a slower speed than the decentralized controllers.

The centralized control signals may be voltage control signals that cause an even distribution of current at outputs of the inverters. The centralized control signals may be voltage control signals that cause the currents at outputs of the inverters to track reference currents.

The centralized controller may execute a polynomial droop control algorithm. Each decentralized controller may execute a droop control algorithm, such as a polynomial droop control algorithm.

In another aspect, the disclosure provides another control method. The other control method includes locally controlling, by local controllers, inverters coupled together in parallel between a common DC bus and a common AC bus. The other control method also includes measuring, by decentralized controllers coupled to the local controllers, respectively, voltages and currents of an electrical power grid coupled to the common AC bus and of the inverters. The other control method also includes generating, by the decentralized controllers, decentralized control signals for the local controllers based on the measured voltages and currents of the electrical power grid and of the inverters. The other control method also includes synchronizing driving of the inverters coupled together in parallel by the decentralized controllers with the decentralized control signals according to the EtherCAT protocol, by which one decentralized controller of the decentralized controllers acts as a master controller, and the remaining decentralized controllers of the decentralized controllers function as slave controllers.

The details of one or more aspects of the disclosure are set forth in the accompanying drawings and the description below. Other features, objects, and advantages of the techniques described in this disclosure will be apparent from the description and drawings, and from the claims.

### BRIEF DESCRIPTION OF DRAWINGS

FIG. 1 is a block diagram of a common DC bus power electronic system of the disclosure.
FIG. 2 is a block diagram of a coordinating centralized control architecture with parallel inverters.
FIG. 3 is a block diagram of a coordinating decentralized control architecture with parallel inverters.
FIGS. 4A and 4B are graphs of droop curves.
FIGS. 5A-7 are circuit block diagrams of control systems that incorporates centralized and decentralized control features.
FIG. 8 is a circuit diagram of a parallel inverter system according to aspects of the disclosure.
FIG. 9 is a flowchart of a control method according to aspects of the disclosure.

### DETAILED DESCRIPTION

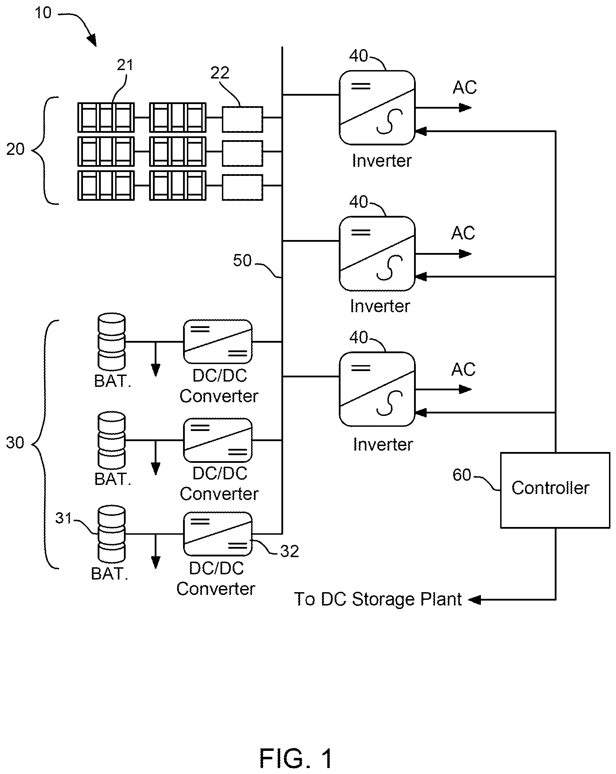

FIG. 1 depicts a power electronic system 10 which is in a common DC bus configuration and may be deployed as part of a larger array. It is contemplated that this application could be utilized for solar tracker systems, fixed tilt solar systems, roof top solar, and any type of solar array. The power electronic system 10 includes inverters 40, which are fed an output voltage from a first power source, such as a solar power plant 20, and from a second power source, such as a DC storage plant 30, by way of a common DC bus 50. Other types of power sources are contemplated such as steam, nuclear, geothermal, hydro-electric, wind, etc. It is contemplated that more than two power sources can be utilized. The inverters 40 can be sized for the AC output requirements of the grid to which it is connected. The common DC bus 50 allows for near instantaneous response to changes in the system power requirements.

The DC storage plant 30 typically includes multiple battery banks 31, bi-directional DC/DC converters 32, and a centralized controller 60. The centralized controller 60 can govern the charge and discharge rate. The bi-directional DC/DC converters 32 can be configured to charge the battery banks 31. The bi-directional DC/DC converters 32 can be sized to the battery output or input. The bi-directional DC/DC converters 32 may employ a power droop algorithm, which maintains constant power output in the normal MPPT region. When the voltage is higher or lower than the MPPT region, a bi-directional DC/DC converter 32 may ramp up power or ramp down power output to the common DC bus 50. The power droop algorithm enables local control of power output from the DC power plant 30 based on the external load. Additionally, the internal resistance of the parallel connected bi-directional DC/DC converters 32 maintains relatively equal current sharing between the battery banks 31. The power droop algorithm, in combination with the battery banks 31 and the photovoltaic panel arrays 21 sharing the common DC bus 50, eliminates the need for additional communication and allows for a fast response to micro-grid applications (e.g., changes in load on the inverters 40). Optionally, DC/DC converters 22 may be electrically coupled between the common DC bus 50 and respective photovoltaic panel arrays 21.

The inverters 40 receive power from the common DC bus 50 and converts the power to an AC voltage. The inverters 40 can be sized for the AC output requirements of the power electronic system 10. The inverters 40 maintain the output power at the Maximum Power Point (MPP) by using, for example, the voltage tracking method. It is contemplated that other methods known in the art can be used. Maximum Power Point Tracking (MPPT), which is the process of finding the keeping the load characteristic at the point where the system is optimized to give the highest power transfer, is run at the input ports of the inverters 40. The output power from the solar plant is sampled and the proper load characteristic (resistance) is applied so as to obtain maximum power. When a grid curtailment command is received at the solar power plant 20 and the DC storage plant 30, the inverters 40 experience a rise in system voltage at the common DC bus 50, and both the solar power plant 20 and the DC storage plant 30 reduce power output without active control. Similarly, in an increasing load scenario, the inverters 40 experience a drop in system voltage at the common DC bus 50, and both the solar power plant 20 and the DC storage plant 30 increase power output without an active control. These changes in voltage are near instantaneous at the inverters 40.

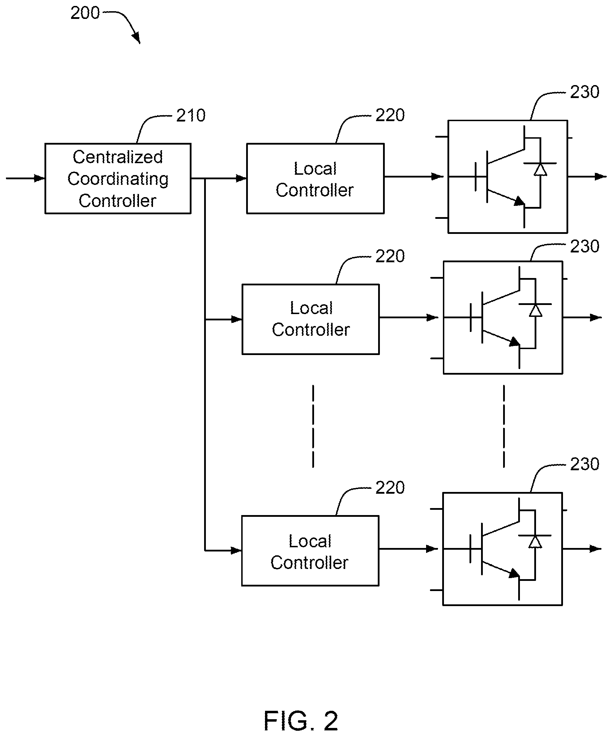

FIG. 2 is a block diagram of a coordinating centralized control architecture 200. In the coordinating centralized control architecture 200, local controllers 220 are coupled to bidirectional inverters 230, respectively, and a centralized coordinating controller 210 is coupled to the local controllers 220. The local controllers 200 are responsible for high frequency switching of the power electronic devices of the bidirectional inverters 230. The local controllers 220 also handle zero sequencing. The centralized coordinating controller 210 may execute an optimization- and data-driven-based control algorithm. The centralized coordinating controller 210 also executes a predictive and model-based control algorithm. The control algorithm is configured to maintain a constant DC voltage despite a varying and uncertain load. The control algorithm is also configured to adjust the current distribution such that the current distribution is evenly distributed and tracks a desired reference current distribution.

The coordinating centralized control features of the disclosure enables a large number of inverters to operate in parallel by using a hierarchical scheme that operates at different time scales with limited communication and forecasting the DC load (e.g., the solar and battery loads). Measurement data is used to learn a model for forecasting the DC load.

The coordinating centralized controller 210 uses an input/output architecture. The input/output architecture incorporates model-based optimization, the goals of which may be expressed as cost functions to minimize. The input/output architecture also measures voltages and currents of the grid and bidirectional inverters 230. The outputs of the input/output architecture may be based on a reference voltage or P/Q control for each inverter 230. The outputs may be based on a polynomial droop curve for each inverter 230. The outputs are adjusted in real time as a function of the forecasted DC load, e.g., the solar and battery loads.

In aspects, the coordinating centralized control architecture 200 may be configured to implement aspects of EtherCAT technology. For example, one local controller 220 may function as the EtherCAT master device and the remaining local controllers 220 may function as EtherCAT slave devices. In one implementation, the EtherCAT master device may carry out all or a portion of the functions performed by the centralized coordinating controller 210.

The operation or control of the bidirectional inverters 230 may be synchronized based on the EtherCAT protocol, which is a deterministic Ethernet-based field-bus protocol. The EtherCAT master device sends a telegram that passes through each node. Each EtherCAT slave device reads the data (e.g., inverter synchronization data) addressed to it "on the fly," and inserts its data in the frame as the frame is moving downstream. The frame is delayed only by hardware propagation delay times. The last node in a segment (or drop line) detects an open port and sends the message back to the EtherCAT master device using Ethernet technology's full duplex feature.

The EtherCAT protocol specifies update times, which may also be referred to as cycle times. In one implementation, the update times may be less than or equal to 100 µs. The EtherCAT protocol also specifies the communication jitter for precise synchronization purposes. In one implementation, the communication jitter may be specified to be less than or equal to 1 µs. The EtherCAT protocol also specifies data rates of more than 100 Mbit/s, which is greater than 90% of the user data rate of 2x100 Mbit/s. For the EtherCAT protocol, typical network update rates may be 1-30 kHz. The EtherCAT protocol is standardized under IEC 61158.

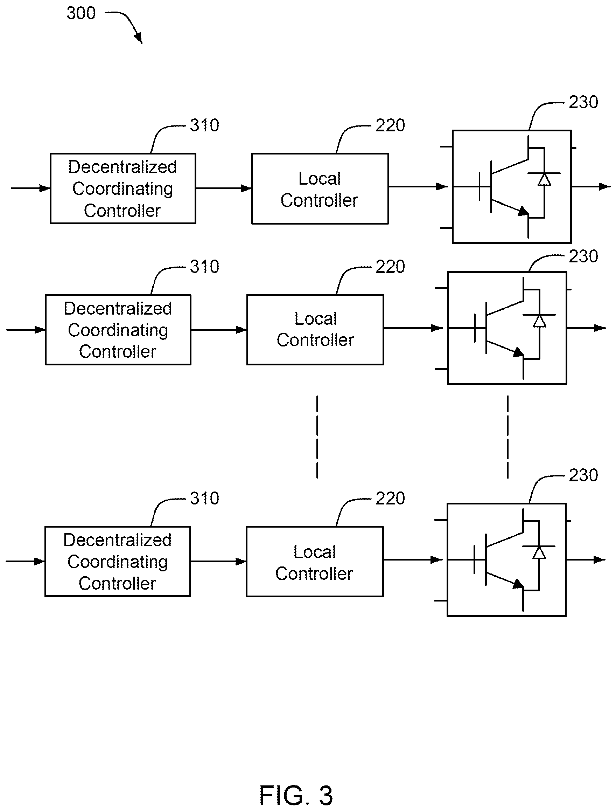

FIG. 3 shows a decentralized coordinating control architecture 300 used in the control system of the disclosure. The decentralized coordinating control architecture 300 avoids communication and increases modularity of the control system. The decentralized coordinating control architecture 300 includes decentralized coordinating controllers 310, which measure voltages and currents of the grid and the local inverters 230. The decentralized coordinating controllers 310 may execute a control algorithms that includes a robust tube prediction algorithm to address the uncertainty of other local inverters not connected to a given local inverter 230. Also, the control algorithms of the decentralized coordinating controllers 310 may use a polynomial droop curve for each inverter and adjust the outputs of the decentralized coordinating controllers 310 as a function of the forecasted DC load, e.g., the solar and battery loads.

In one aspects, the decentralized coordinating control architecture 300 may be configured to implement aspects of EtherCAT technology. For example, one decentralized coordinating controller 310 of the decentralized coordinating controllers 310 may function as the EtherCAT master device and the remaining decentralized coordinating controllers 310 may function as EtherCAT slave devices. According to this configuration, the decentralized coordinating controllers 310 may coordinate control of the inverters 230 via the local controllers 220.

In another aspect, decentralized coordinating control architecture 300 may be controlled according to the following control method. The control method includes locally controlling, by the local controllers 220, inverters 230 coupled together in parallel between a common DC bus and a common AC bus. The control method also includes measuring, by the decentralized coordinating controllers 310 coupled to the local controllers 220, respectively, voltages and currents of an electrical power grid coupled to the common AC bus and of the inverters 230. The control method also includes generating, by the decentralized coordinating controllers 310, decentralized coordinating control signals for the local controllers 220 based on the measured voltages and currents of the electrical power grid and of the inverters 230. The control method also includes synchronizing driving of the inverters 230 coupled together in parallel by the decentralized coordinating controllers 310 with the decentralized coordinating control signals according to the EtherCAT protocol, by which one decentralized coordinating controller 310 of the decentralized coordinating controllers 310 acts as an EtherCAT master controller, and the remaining decentralized coordinating controllers 310 of the decentralized coordinating controllers 310 act as EtherCAT slave controllers.

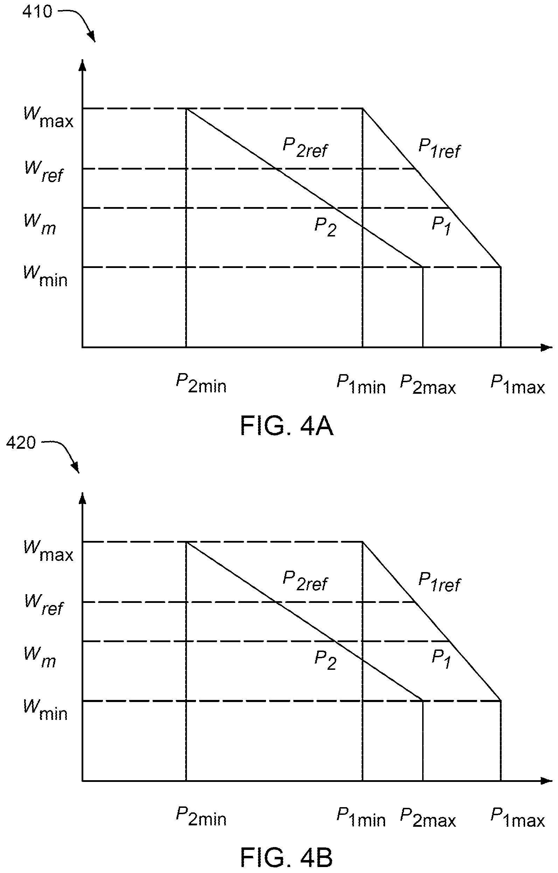

FIGS. 4A and 4B are examples of graphs of droop curves used by the control systems of the disclosure. The droop curves may be expressed as *ωₘ - ω_{ref}* = *-g* (*Pₘ - P_{ref}*) and *Vₘ - V_{ref}*= *-h* (*Qₘ - Q_{ref}*), where *P_{ref}* and *Q_{ref}* are the set points for active and reactive power, *Q_{ref}* and *V_{ref}* are the set points for frequency and inverter voltage magnitude, and g and h are the droop curve slopes. The graph of FIG. 4A illustrates the *P* - *ω* droop features and FIG. 4B illustrates the Q - *V* droop features. The droop curves may be used to generate a droop control algorithm or a polynomial droop control algorithm, which may be incorporated into or used together with the centralized coordinating control methods or decentralized coordinating control methods of the disclosure.

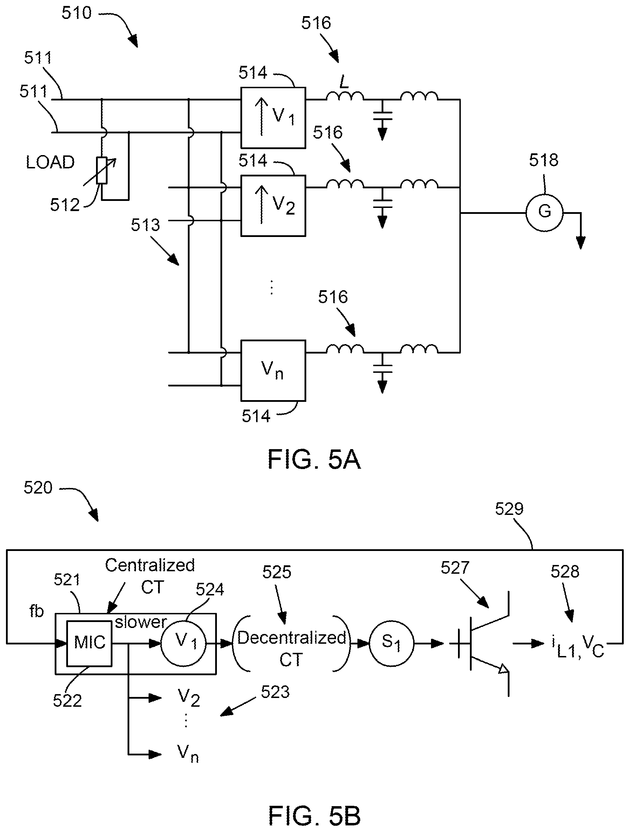

FIGS. 5A-7 are circuit diagrams of a system that incorporates centralized and decentralized control features. As shown in the parallel inverter system 510 of FIG. 5A, the power outputs 511 of multiple PV panels (e.g., the photovoltaic panel arrays 21 of FIG. 1) supported by multiple solar trackers (not shown) are electrically coupled to a common DC bus 513. A load 512, such as a motor of a solar tracker, may be electrically coupled in parallel with each of the power outputs. The common DC bus 513, in turn, is electrically coupled to multiple inverters 514, each of which include power switching devices (e.g., power transistors). The inverters 514, in turn, are electrically coupled to LCL filters 516, respectively, which filter the current output from the inverters 514 to improve the quality of the current output from the inverters 514. The inverters 514 boost the voltage and supply AC power (e.g., three-phase AC power) to the grid 518.

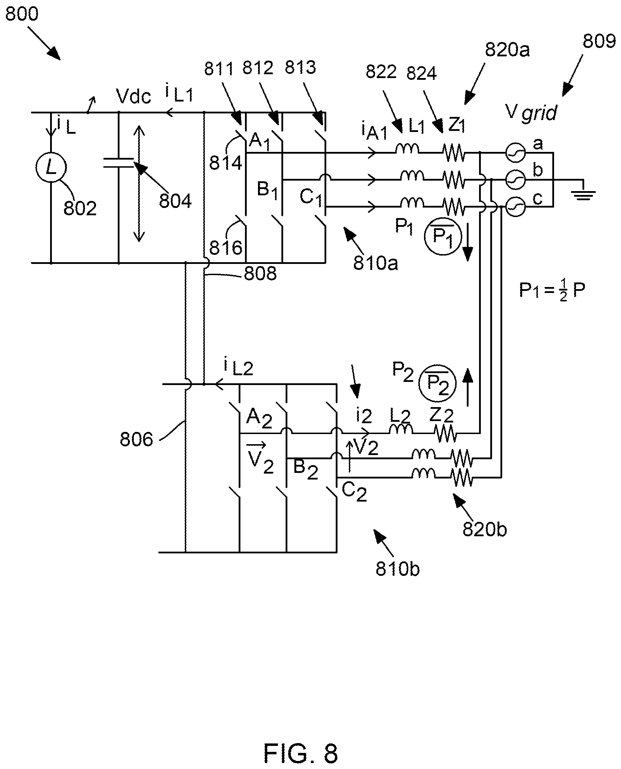

FIG. 5B shows a block diagram of feedback control system 520 for operating the power switching devices (e.g., the pairs 811, 812, 813 of power switching devices 814, 816 of FIG. 8) of the inverters 514 of FIG. 5A. The currents 528 through the inductors of the LCL filters 516 (or the currents i_{L1}, i_{L2} through the inductors L1, L2 of the series RL circuits 820a, 820b of FIG. 8) and the voltages 528 across the capacitors (e.g., vc) of the LCL filters 516 are measured at the output of an inverter 527, and fed, via feedback line 529, to a centralized controller 521, which includes a microcontroller 522.

The microcontroller 522 may execute a software application that implements the functions of the centralized coordinating controller 210 illustrated in FIG. 2. The microcontroller 522 then outputs control command signals to the decentralized coordinating controllers 310. The control command signals may include desired voltage values 524. The control command signals may also include desired voltage values 523, which are applied to other decentralized controllers 525, which control other corresponding inverters 527 arranged in parallel according to the disclosure.

The decentralized coordinating controllers 310 generate switching signals to drive operation of the power switching devices. The decentralized coordinating control method performed by the decentralized controller 525 may be performed at a speed greater than the centralized coordinating control method performed by the centralized controller 521. For example, the decentralized coordinating control method may be executed by the decentralized controller 525 in the kHz range while the centralized control may be executed by the centralized controller 521 in the Hz range or greater, e.g., every 10 seconds.

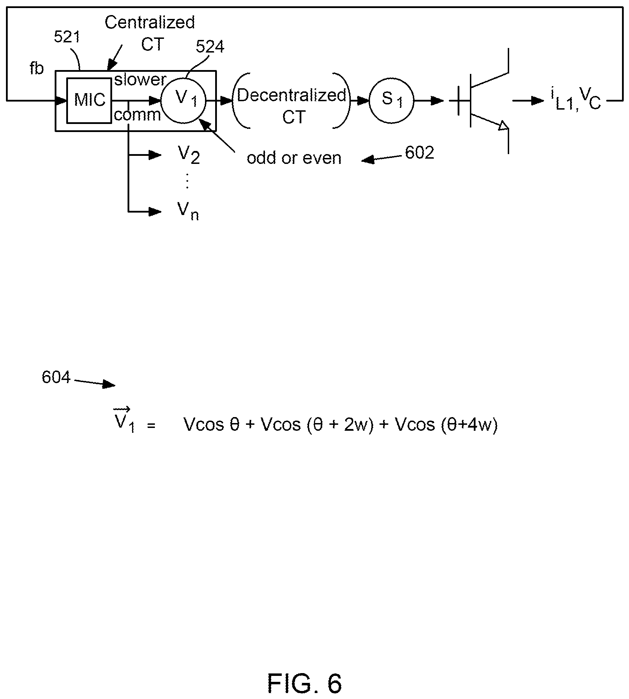

The microcontroller 522 of FIG. 5B executes various control methods or algorithms. As shown in FIG. 6, the microcontroller 522 may execute a space vector modulation (SVM) algorithm, which generates either an odd-order 602 harmonic voltage control signal 524 or an even-order 602 harmonic voltage control signal 604. Alternatively, the microcontroller 522 may execute a Sine Pulse-Width Modulation (SPWM) algorithm, a Space Vector PWM (SVPWM) algorithm, or a Discontinuous PWM (DPWM) algorithm.

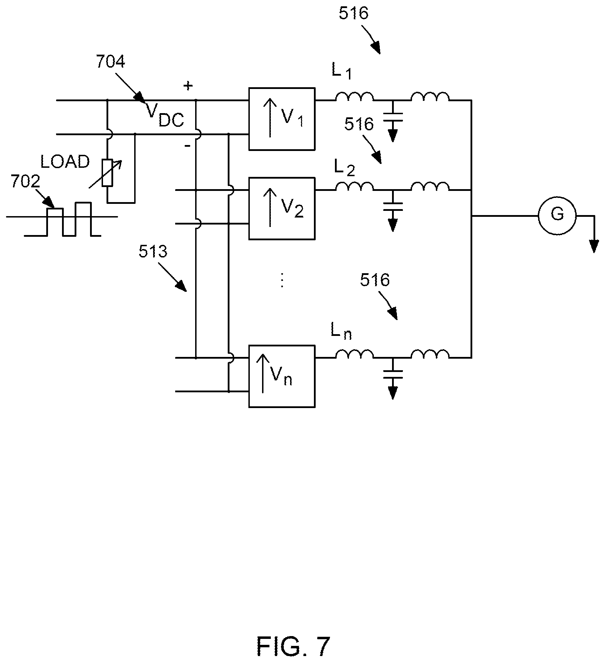

As shown in FIG. 7, the microcontroller 522 generates voltage control signals or waveforms 702 that maintain a fixed DC voltage V_{DC} 704 on the common DC bus 513. The voltage control signals or waveforms 702 may also cause 0 zero-order current. The voltage control signals or waveforms 702 may also evenly distribute the current through the inductors L1, L2, Ln of the LCL filters 516 (i_{L1}=i_{L2}=i_{Ln}). In some aspects, microcontroller 522 may be programmed to generate voltage control signals or waveforms 702 that distribute the current on demand. The microcontroller 522 also controls converters (not shown) to provide and feed a DC voltage, which may be a fixed DC voltage, to the inputs of the inverters 514.

FIG. 8 illustrates a parallel inverter system 810 according to aspects of the disclosure. While FIG. 8 shows a two-inverter configuration, the parallel inverter system 810 may include more than two inverters placed in parallel. Each inverter 810a, 810b includes three pairs 811, 812, 813 of series-connected power switching devices 814, 816, which may be implemented by suitable semiconductor switching devices. The three pairs 811, 812, 813 of series-connected power switching devices 814, 816 are connected in parallel with each other.

A series RL circuit 820a, which includes an inductor 822 and a resistor 824, is coupled to each connection point between each pair 811, 812, 813 of power switching devices. The inverter 810b also includes series RL circuits 820b.

Each inverter 810a, 810b includes three outputs (a, b, c) coupled to each of the series RL circuits. Each of the three outputs couples to the grid and provides one phase of a three-phase AC output signal to the grid having a voltage V_{grid} 809. A load 802 is placed in parallel with an input of each inverter 810a, 810b via common DC bus lines 806, 808. The load 802 can be positive or negative. Also, the parallel inverter system 800 is controlled such that a constant DC voltage is applied to the inverter inputs.

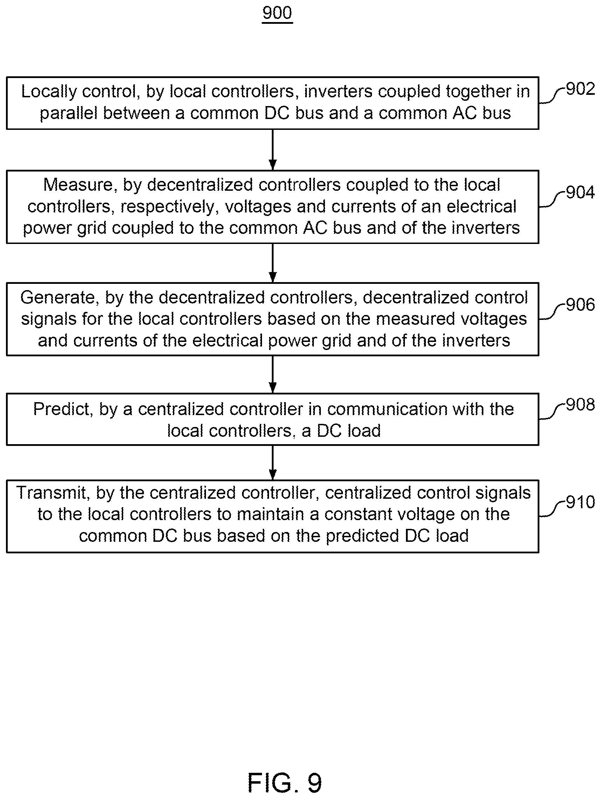

FIG. 9 is a flowchart of a control method 900 according to aspects of the disclosure. At block 902, local controllers locally control inverters coupled together in parallel between a common DC bus and a common AC bus. At block 904, decentralized controllers, which are coupled to the local controllers, respectively, measure voltages and currents of an electrical power grid coupled to the common AC bus and of the inverters. At block 906, the decentralized controllers generate decentralized control signals for the local controllers based on the measured voltages and currents of the electrical power grid and of the inverters. At block 908, a centralized controller in communication with the local controllers predicts a DC load. Then, at block 910, the centralized controller transmits centralized control signals to the local controllers to maintain a constant voltage on the common DC bus based on the predicted DC load.

It should be understood that various aspects disclosed herein may be combined in different combinations than the combinations specifically presented in the description and accompanying drawings. It should also be understood that, depending on the example, certain acts or events of any of the processes or methods described herein may be performed in a different sequence, may be added, merged, or left out altogether (e.g., all described acts or events may not be necessary to carry out the techniques). In addition, while certain aspects of this disclosure are described as being performed by a single module or unit for purposes of clarity, it should be understood that the techniques of this disclosure may be performed by a combination of units or modules associated with, for example, a medical device.

In one or more examples, the described techniques may be implemented in hardware, software, firmware, or any combination thereof. If implemented in software, the functions may be stored as one or more instructions or code on a computer-readable medium and executed by a hardware-based processing unit. Computer-readable media may include non-transitory computer-readable media, which corresponds to a tangible medium such as data storage media (e.g., RAM, ROM, EEPROM, flash memory, or any other medium that can be used to store desired program code in the form of instructions or data structures and that can be accessed by a computer).

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor" as used herein may refer to any of the foregoing structure or any other physical structure suitable for implementation of the described techniques. Also, the techniques could be fully implemented in one or more circuits or logic elements.

## Claims

1. A system comprising:
inverters (40) coupled together in parallel;
a common DC bus (50) coupled to inputs of the inverters:
a common AC bus coupled between outputs of the inverters and an electrical power grid;
local controllers (220) coupled to the inverters, respectively; decentralized controllers (310) coupled to the local controllers, respectively, the decentralized controllers configured to measure voltages and currents of the electrical power grid and the inverters and configured to generate decentralized control signals for the local controllers based on the measured voltages and currents of the electrical power grid and the inverters; and
**characterised in that** the system further comprises:
a centralized controller (210) in communication with the local controllers and configured to predict a DC load and transmit centralized control signals to the local controllers to maintain a constant voltage on the common DC bus based on the predicted DC load.

2. The system of claim 1, wherein the inverters are three-phase inverters.

3. The system of claim 1, wherein the DC load includes a photovoltaic (PV) device, an energy storage device, or the PV device and the energy storage device.

4. The system of claim 1, wherein the centralized controller is configured to operate at a slower speed than the decentralized controllers.

5. The system of claim 1, wherein the number of inverters is greater than 20.

6. The system of claim 1, wherein the number of inverters is greater than 40.

7. The system of claim 1, wherein the centralized control signals are voltage control signals that cause an even distribution of current at outputs of the inverters.

8. The system of claim 1, wherein the centralized control signals are voltage control signals that cause the currents at outputs of the inverters to track reference currents.

9. The system of claim 1, wherein the centralized controller is configured to execute a polynomial droop control algorithm.

10. The system of claim 1, wherein each decentralized controller is configured to execute a droop control algorithm or a polynomial droop control algorithm.

11. The system of claim 1, wherein the centralized controller is incorporated into one local controller of the local controllers and is configured to function as a master controller,
wherein the remaining local controllers of the local controllers are configured to function as slave controllers, and
wherein the local controllers are configured to communicate with each other via the EtherCAT protocol.

12. A method comprising:
locally controlling, by local controllers (220), inverters (40) coupled together in parallel between a common DC bus (50) and a common AC bus;
measuring, by decentralized controllers (310) coupled to the local controllers (220), respectively, voltages and currents of an electrical power grid coupled to the common AC bus and of the inverters;
generating, by the decentralized controllers (310), decentralized control signals for the local controllers based on the measured voltages and currents of the electrical power grid and of the inverters;
predicting, by a centralized controller (210) in communication with the local controllers, a DC load; and
transmitting, by the centralized controller (210), centralized control signals to the local controllers to maintain a constant voltage on the common DC bus based on the predicted DC load.

13. The method of claim 12, wherein the inverters are three-phase inverters.

14. The method of claim 12, wherein the DC load includes a photovoltaic (PV) device, an energy storage device, or the PV device and the energy storage device.

15. The method of claim 12, further comprising operating the centralized controller at a slower speed than the decentralized controllers.

16. The method of claim 12, wherein the centralized control signals are voltage control signals that cause an even distribution of current at outputs of the inverters

17. The method of claim 12, wherein the centralized control signals are voltage control signals that cause the currents at outputs of the inverters to track reference currents.

18. The method of claim 12, further comprising executing, by the centralized controller, a polynomial droop control algorithm.

19. The method of claim 12, further comprising executing, by each decentralized controller, a droop control algorithm or a polynomial droop control algorithm.

## Patentansprüche

1. System, umfassend:
Inverter (40), die parallel miteinander gekoppelt sind;
einen gemeinsamen Gleichstrombus (50), der mit Eingängen der Inverter gekoppelt ist;
einen gemeinsamen Wechselstrombus, der zwischen Ausgängen der Inverter und einem elektrischen Stromnetz gekoppelt ist;
lokale Steuerungen (220), die jeweils mit den Invertern gekoppelt sind;
dezentrale Steuerungen (310), die jeweils mit den lokalen Steuerungen gekoppelt sind, wobei die dezentralen Steuerungen dazu konfiguriert sind, Spannungen und Ströme des elektrischen Stromnetzes und der Inverter zu messen, und dazu konfiguriert sind, dezentrale Steuersignale für die lokalen Steuerungen basierend auf den gemessenen Spannungen und Strömen des elektrischen Stromnetzes und der Inverter zu erzeugen;
**dadurch gekennzeichnet, dass** das System ferner umfasst:
eine zentrale Steuerung (210), die in Kommunikation mit den lokalen Steuerungen steht und dazu konfiguriert ist, eine Gleichstromlast vorherzusagen und zentrale Steuersignale an die lokalen Steuerungen zu übertragen, um eine konstante Spannung am gemeinsamen Gleichstrombus basierend auf der vorhergesagten Gleichstromlast aufrechtzuerhalten.

2. System nach Anspruch 1, wobei die Inverter dreiphasige Inverter sind.

3. System nach Anspruch 1, wobei die Gleichstromlast eine photovoltaische (PV) Vorrichtung, eine Energiespeichervorrichtung oder die PV-Vorrichtung und die Energiespeichervorrichtung umfasst.

4. System nach Anspruch 1, wobei die zentrale Steuerung dazu konfiguriert ist, mit einer langsameren Geschwindigkeit als die dezentralen Steuerungen zu arbeiten.

5. System nach Anspruch 1, wobei die Anzahl der Inverter größer als 20 ist.

6. System nach Anspruch 1, wobei die Anzahl der Inverter größer als 40 ist.

7. System nach Anspruch 1, wobei die zentralen Steuersignale Spannungssteuersignale sind, die eine gleichmäßige Verteilung des Stroms an Ausgängen der Inverter bewirken.

8. System nach Anspruch 1, wobei die zentralen Steuersignale Spannungssteuersignale sind, die bewirken, dass die Ströme an Ausgängen der Inverter Referenzströmen folgen.

9. System nach Anspruch 1, wobei die zentrale Steuerung dazu konfiguriert ist, einen polynomialen Droop-Regelungsalgorithmus auszuführen.

10. System nach Anspruch 1, wobei jede dezentrale Steuerung dazu konfiguriert ist, einen Droop-Regelungsalgorithmus oder einen polynomialen Droop-Regelungsalgorithmus auszuführen.

11. System nach Anspruch 1, wobei die zentrale Steuerung in eine lokale Steuerung der lokalen Steuerungen integriert ist und dazu konfiguriert ist, als Master-Controller zu fungieren,
wobei die übrigen lokalen Steuerungen der lokalen Steuerungen dazu konfiguriert sind, als Slave-Controller zu fungieren, und
wobei die lokalen Steuerungen dazu konfiguriert sind, über das EtherCAT-Protokoll miteinander zu kommunizieren.

12. Verfahren, umfassend:
lokales Steuern, durch lokale Steuerungen (220), von Invertern (40), die zwischen einem gemeinsamen Gleichstrombus (50) und einem gemeinsamen Wechselstrombus parallel miteinander gekoppelt sind;
Messen, durch dezentrale Steuerungen (310), die jeweils mit den lokalen Steuerungen (220) gekoppelt sind, von Spannungen und Strömen eines elektrischen Stromnetzes, das mit dem gemeinsamen Wechselstrombus gekoppelt ist, und der Inverter;
Erzeugen, durch die dezentralen Steuerungen (310), dezentraler Steuersignale für die lokalen Steuerungen basierend auf den gemessenen Spannungen und Strömen des elektrischen Stromnetzes und der Inverter;
Vorhersagen, durch eine zentrale Steuerung (210) in Kommunikation mit den lokalen Steuerungen, einer Gleichstromlast; und
Übertragen, durch die zentrale Steuerung (210), zentraler Steuersignale an die lokalen Steuerungen, um eine konstante Spannung am gemeinsamen Gleichstrombus basierend auf der vorhergesagten Gleichstromlast aufrechtzuerhalten.

13. Verfahren nach Anspruch 12, wobei die Inverter dreiphasige Inverter sind.

14. Verfahren nach Anspruch 12, wobei die Gleichstromlast eine photovoltaische (PV) Vorrichtung, eine Energiespeichervorrichtung oder die PV-Vorrichtung und die Energiespeichervorrichtung umfasst.

15. Verfahren nach Anspruch 12, ferner umfassend das Betreiben der zentralen Steuerung mit einer langsameren Geschwindigkeit als die dezentralen Steuerungen.

16. Verfahren nach Anspruch 12, wobei die zentralen Steuersignale Spannungssteuersignale sind, die eine gleichmäßige Verteilung des Stroms an Ausgängen der Inverter bewirken.

17. Verfahren nach Anspruch 12, wobei die zentralen Steuersignale Spannungssteuersignale sind, die bewirken, dass die Ströme an Ausgängen der Inverter Referenzströmen folgen.

18. Verfahren nach Anspruch 12, ferner umfassend das Ausführen, durch die zentrale Steuerung, eines polynomialen Droop-Regelungsalgorithmus.

19. Verfahren nach Anspruch 12, ferner umfassend das Ausführen, durch jede dezentrale Steuerung, eines Droop-Regelungsalgorithmus oder eines polynomialen Droop-Regelungsalgorithmus.

## Revendications

1. Système comprenant :
des onduleurs (40) couplés ensemble en parallèle ;
un bus CC commun (50) couplé à des entrées des onduleurs ;
un bus CA commun couplé entre des sorties des onduleurs et un réseau électrique ;
des contrôleurs locaux (220) couplés respectivement aux onduleurs ;
des contrôleurs décentralisés (310) couplés respectivement aux contrôleurs locaux, les contrôleurs décentralisés étant configurés pour mesurer des tensions et des courants du réseau électrique et des onduleurs et étant configurés pour générer des signaux de commande décentralisés pour les contrôleurs locaux sur la base des tensions et courants mesurés du réseau électrique et des onduleurs ; et
**caractérisé en ce que** le système comprend en outre :
un contrôleur centralisé (210) en communication avec les contrôleurs locaux et configuré pour prédire une charge CC et transmettre des signaux de commande centralisés aux contrôleurs locaux afin de maintenir une tension constante sur le bus CC commun sur la base de la charge CC prédite.

2. Système selon la revendication 1, les onduleurs étant des onduleurs triphasés.

3. Système selon la revendication 1, la charge CC comprenant un dispositif photovoltaïque (PV), un dispositif de stockage d'énergie, ou le dispositif PV et le dispositif de stockage d'énergie.

4. Système selon la revendication 1, le contrôleur centralisé étant configuré pour fonctionner à une vitesse plus lente que les contrôleurs décentralisés.

5. Système selon la revendication 1, le nombre d'onduleurs étant supérieur à 20.

6. Système selon la revendication 1, le nombre d'onduleurs étant supérieur à 40.

7. Système selon la revendication 1, les signaux de commande centralisés étant des signaux de commande de tension qui entraînent une distribution uniforme de courant au niveau de sorties des onduleurs.

8. Système selon la revendication 1, les signaux de commande centralisés étant des signaux de commande de tension qui entraînent les courants au niveau de sorties des onduleurs à suivre des courants de référence.

9. Système selon la revendication 1, le contrôleur centralisé étant configuré pour exécuter un algorithme de commande de statisme polynomial.

10. Système selon la revendication 1, chaque contrôleur décentralisé étant configuré pour exécuter un algorithme de commande de statisme ou un algorithme de commande de statisme polynomial.

11. Système selon la revendication 1, le contrôleur centralisé étant incorporé dans un contrôleur local des contrôleurs locaux et étant configuré pour fonctionner comme un contrôleur maître,
les contrôleurs locaux restants des contrôleurs locaux étant configurés pour fonctionner en tant que contrôleurs esclaves, et
les contrôleurs locaux étant configurés pour communiquer les uns avec les autres via le protocole EtherCAT.

12. Procédé comprenant :
la commande locale, par des contrôleurs locaux (220), d'onduleurs (40) couplés ensemble en parallèle entre un bus CC commun (50) et un bus CA commun ;
la mesure, par des contrôleurs décentralisés (310) couplés aux contrôleurs locaux (220), respectivement, de tensions et courants d'un réseau électrique couplé au bus CC commun et des onduleurs ;
la génération, par les contrôleurs décentralisés (310), de signaux de commande décentralisés pour les contrôleurs locaux sur la base des tensions et courants mesurés du réseau électrique et des onduleurs ;
la prédiction, par un contrôleur centralisé (210) en communication avec les contrôleurs locaux, d'une charge CC ; et
la transmission, par le contrôleur centralisé (210), de signaux de commande centralisés aux contrôleurs locaux afin de maintenir une tension constante sur le bus CC commun sur la base de la charge CC prévue.

13. Procédé selon la revendication 12, les onduleurs étant des onduleurs triphasés.

14. Procédé selon la revendication 12, la charge CC comportant un dispositif photovoltaïque (PV), un dispositif de stockage d'énergie, ou le dispositif PV et le dispositif de stockage d'énergie.

15. Procédé selon la revendication 12, comprenant en outre le fonctionnement du contrôleur centralisé à une vitesse plus lente que les contrôleurs décentralisés.

16. Procédé selon la revendication 12, les signaux de commande centralisés étant des signaux de commande de tension qui entraînent une distribution uniforme de courant au niveau de sorties des onduleurs.

17. Procédé selon la revendication 12, les signaux de commande centralisés étant des signaux de commande de tension qui entraînent les courants au niveau de sorties des onduleurs à suivre des courants de référence.

18. Procédé selon la revendication 12, comprenant en outre l'exécution, par le contrôleur centralisé, d'un algorithme de commande de statisme polynomial.

19. Procédé selon la revendication 12, comprenant en outre l'exécution, par chaque contrôleur décentralisé, d'un algorithme de commande de statisme ou d'un algorithme de commande de statisme polynomial.
